# EUROPEAN PATENT SPECIFICATION

(11) **EP 2 564 042 B1**
(45) Date of publication and mention of the grant of the patent: **01.07.2015**
(21) Application number: 11719848.1
(22) Date of filing: 04.04.2011
(51) Int. Cl.: F01N 3/20, F01N 3/36, F01N 3/28

(54) **ARRANGEMENT AND METHOD FOR MIXING REDUCING AGENT WITH EXHAUST GAS**
ANORDNUNG UND VERFAHREN ZUM MISCHEN EINES REDUKTIONSMITTELS MIT ABGAS
AGENCEMENT ET PROCÉDÉ POUR LE MÉLANGE D'UN AGENT RÉDUCTEUR À UN GAZ D'ÉCHAPPEMENT

(30) Priority: 26.04.2010 FI 20105451
(43) Date of publication of application: 06.03.2013
(73) Proprietor: Wärtsilä Finland Oy, 65380 Vaasa (FI)
(72) Inventor: SADINMÄKI, Jukka, FI-65610 Mustasaari (FI); WIDJESKOG, Klaus, FI-65730 Jungsund (FI)
(74) Representative: Berggren Oy Ab
(86) International application number: PCT/FI2011/050287
(87) International publication number: WO 2011/135161

(56) References cited:
- DE-A1- 19 934 413

## Description

### Technical field of the invention

The present invention relates to an arrangement for mixing reducing agent with the exhaust gas of an internal combustion engine before selective catalytic reduction, as defined in the preamble of claim 1. The invention also concerns a method for mixing reducing agent with the exhaust gas of an internal combustion engine before selective catalytic reduction, as defined in the preamble of claim 11.

### Background of the invention

Nitrogen oxide (NOx) emissions of internal combustion engines in ships and power plants are a growing concern and subject to continuously tightening regulations set by the International Maritime Organization (IMO) and other legislative bodies. To a certain extent, the requirements set by different regulations can be met by means that are directly related to the operation of the engine, such as exhaust gas recirculation, high fuel injection pressures in diesel engines, water injection into the air intake duct etc. However, many engine-related measures for reducing NOx emissions have a negative effect on the fuel efficiency, and they are not adequate for meeting the most stringent emission limits. For ultimate NOx reduction, selective catalytic reduction (SCR) is needed. With the SCR, NOx reductions of up to 90% or even greater can be achieved.

In an SCR system a catalyst material and a reducing agent are used to decompose the NOx formed during the combustion back to the basic elements. The catalyst is arranged on the surface of a supporting ceramic material forming a honeycomb structure inside a reactor. On the surface of the catalyst, the NOx reacts with ammonia that is used as the reducing agent and nitrogen and water is formed. In practice, urea is often used instead of ammonia for safety reasons. This applies especially to the marine applications, where leaking ammonia is a serious hazard. Urea is injected into the exhaust gas flow in a water solution. Due to the high temperature of the exhaust gas, water evaporates and the urea molecules break up into ammonia and carbon dioxide.

A typical SCR system comprises a urea tank, from which the urea solution is delivered by means of a pumping unit. A dosing unit is used to provide the correct urea solution flow rate for injection. The urea solution is injected into the exhaust gas duct by means of an injection unit. The injection unit comprises two coaxial pipes, of which the inner one is for the urea solution and the outer one for compressed air that is mixed with the urea solution in a nozzle to form a fine spray that mixes with the exhaust gas flow.

For effective NOx reduction and minimized usage of urea, as well as for minimum ammonia slip through the SCR system, effective mixing of the urea with the exhaust gas flow is essential. Modular structure of a mixing arrangement is desired for easy retrofitting into existing engines. Prior art solutions, for exemple disclosed in the document DE19934413 A1, have not solved these issues satisfactorily.

### Summary of the invention

The object of the present invention is to provide an improved arrangement and method for mixing reducing agent with the exhaust gas of an internal combustion engine in the exhaust system of the engine before selective catalytic reduction. The invention is suitable for use in connection with large engines operating according to the diesel cycle. This type of engines can be found for instance in ships and powerplants. The invention is especially suitable for marine applications, but can also be used in other applications. The characterizing features of the arrangement according to the present invention are given in the characterizing part of claim 1. The characterizing features of the method according to the present invention are given in the characterizing part of claim 11.

According to the invention, the arrangement comprises a flange that can be arranged between two parts of the exhaust system upstream from a catalytic converter. The flange comprises an inner circumference and an outer circumference and at least one rod extending inwards from the inner circumference of the flange. At least one nozzle is arranged in the rod for injecting reducing agent into the exhaust gas flow. The flange further comprises at least one delivery duct for delivering reducing agent to the nozzle. The arrangement according to the present invention has a modular structure and provides good mixing of the reducing agent with the exhaust gas and no further mixing downstream from the flange is needed. It has no vibration problems and can be used in connection with new engines and in retrofits, since the existing piping of the engine can be used.

According to an embodiment of the invention, the delivery duct is arranged inside the rod. This ensures that there are no excess parts in the exhaust gas duct that could disturb the exhaust gas flow.

According to another embodiment of the invention, the arrangement comprises a plurality of rods and each of the rods comprises at least one nozzle. Larger number of rods and nozzles facilitates mixing of the reducing agent and the exhaust gas. There is also the possibility to connect the rods to each other or to a separate center part and achieve thus a more rigid structure.

According to another embodiment of the present invention, the arrangement comprises a hollow center part having the shape of a truncated cone and having a first aperture at the wide end and a second aperture at the narrow end, the center part being arranged around the center of the flange and being attached to at least one rod. The center part can point towards the flow direction or to the opposite direction and it can also be arranged to rotate. The center part boosts the mixture formation.

Features of other embodiments of the arrangement according to the present invention are given in the dependent claims.

According to the invention, in the method for mixing reducing agent with the exhaust gas of an internal combustion engine in the exhaust system of the engine before selective catalytic reduction, reducing agent is injected into the exhaust gas flow through a flange defined above.

Features of the embodiments of the method according to the present invention are given in the dependent claims.

### Brief description of the drawings

Fig. 1 shows schematically an SCR system.
Fig. 2 shows an embodiment of the present invention with a center part pointing to the flow direction.
Fig. 3 shows an embodiment of the invention with a center part pointing to the direction opposite to the flow direction.
Fig. 4 shows a partial cross-sectional view of an embodiment of the invention where the flange comprises two parts.
Fig. 5 shows a cross-sectional view of an embodiment of the invention with separate coaxial ducts for urea and pressurized air.
Fig. 6 shows an embodiment of the invention with a rotating center part.
Fig. 7 shows an embodiment of the invention with a flow dresser grid.
Fig. 8 shows a partial cross-sectional view of an embodiment of the invention with a distribution channel arranged inside the flange.
Fig. 9 shows a cross-sectional view of an embodiment of the invention with an air distribution duct.

### Detailed description of the invention

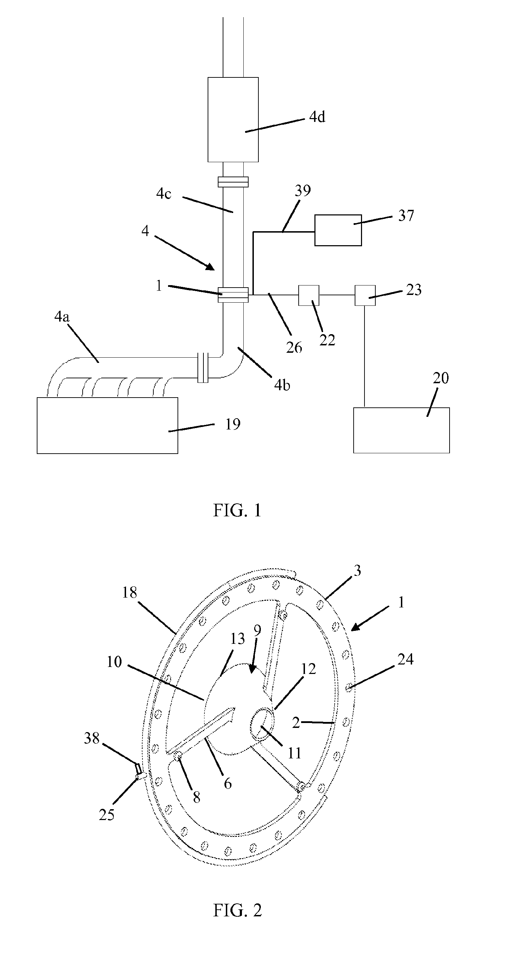

Some embodiments of the present invention are now described with reference to the accompanying drawings. Fig. 1 shows schematically an example of an SCR system where the present invention can be used. Exhaust gases from an internal combustion engine 19 operating according to the diesel cycle are guided through an exhaust system 4 and released then into the air. The exhaust system 4 comprises an exhaust manifold 4a, a first exhaust gas duct part 4b, a second exhaust gas duct part 4c and a catalytic converter 4d for selective catalytic reduction. The engine 19 can be for instance a large four-stroke diesel engine that is used as a main or auxiliary engine of a ship or in a power plant. In the catalytic converter 4d NOx molecules react with ammonia on the surface of a catalyst material forming nitrogen and water. The reducing agent is injected into the exhaust gas flow before the catalytic converter 4d through a flange 1, which is part of the invention and of which different embodiments are shown in more detail in Figs. 2-8.

For safety reasons, the reducing agent is stored and injected into the exhaust gas flow in the form of a urea solution. The urea solution is stored in a tank 20, from which it is pumped by means of a pumping unit 23. The concentration of the urea in the solution can vary depending on the application, but the concentration is suitably in the range between 30-60 wt%. A dosing unit 22 is used to dose the correct amount of the urea solution into the exhaust gas flow through the flange 1. When the urea solution is injected into the exhaust gas flow, water evaporates due to the high temperature of the exhaust gas and the urea molecules break up into ammonia and carbon dioxide. The amount of the urea solution to be injected into the exhaust gas flow depends on the mass flow and properties of the exhaust gas. For instance data concerning the engine load and speed can be used to determine the correct amount of urea to be injected. Also measuring instruments may be connected to the flange 1 and/or to an exhaust gas duct part 4b, 4c upstream and/or downstream from the flange 1 and can be used to determine the correct flow rate for the urea injection.

The SCR system of Fig. 1 is also provided with a storage 37 for pressurized air. From the storage 37, the pressurized air is brought through an air duct 39 to the flange 1. Pressurized air is mixed with the urea solution before the solution is injected into the exhaust system 4 to form a fine spray that mixes with the exhaust gas flow. The storage 37 is not necessarily an essential part of the SCR system. Urea can also be decomposed into ammonia and carbon dioxide before the flange 1. In that case the pressurized air is not needed. The device for decomposing urea can be integrated with the dosing unit 22.

The flange 1 has a circular shape. It is suitably made of a metal or an alloy, for example of steel. The flange 1 has an inner circumference 2 and an outer circumference 3. The flange 1 is attached between two parts of the exhaust system 4 upstream from the catalytic converter 4d. In the embodiment of Fig. 1, the flange 1 is located between the first exhaust gas duct part 4b and the second exhaust gas duct part 4c. The flange could also be located between the exhaust manifold 4a and the first exhaust gas duct part 4b, or between the second exhaust gas duct part 4c and the catalytic converter 4d. The exhaust system 4 can also comprise more parts, for instance several exhaust gas duct parts and/or a turbocharger, and the flange 1 can be arranged between any two of these parts. The embodiment of Fig. 1 has the advantage that a suitable mixing distance is achieved before the mixture of the reducing agent and exhaust gas enters the catalytic converter 4d. The flange 1 is connected to the exhaust gas duct parts 4b, 4c so that the center axis of the flange 1 is parallel with the center axis of the second exhaust gas duct part 4b.

The arrangement is further provided with rods 6 extending inwards from the inner circumference 2 of the flange 1. The inner ends of the rods 6 extend close to the center of the flange 1. Also the rods 6 are suitably made of a metal or an alloy, for example of steel. Nozzles 8 for injecting the reducing agent into the exhaust gas flow are arranged in the rods 6. The nozzles 8 point to the flow direction of the exhaust gas. The advantage of this alignment over the opposite alignment is that the nozzles 8 are not so easily clogged by the particles in the exhaust gas flow. However, also different alignment of the nozzles 8 is possible. The nozzles 8 can for instance be inclined so that the center axis of the nozzles form an angle, for instance of 5-50 degrees, with the center axis of the flange 1. The nozzles 8 can also be constructed so that the reducing agent is injected in an angle with the center axis of a nozzle 8.

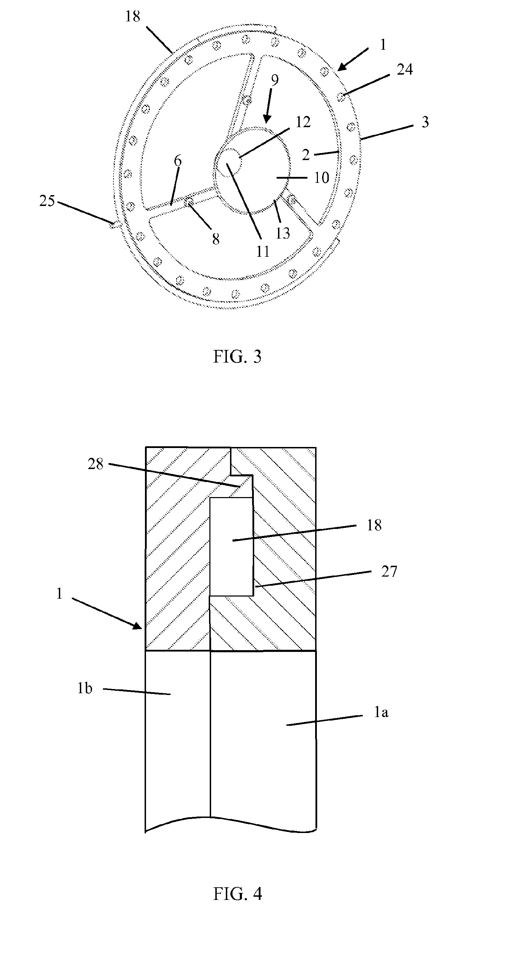

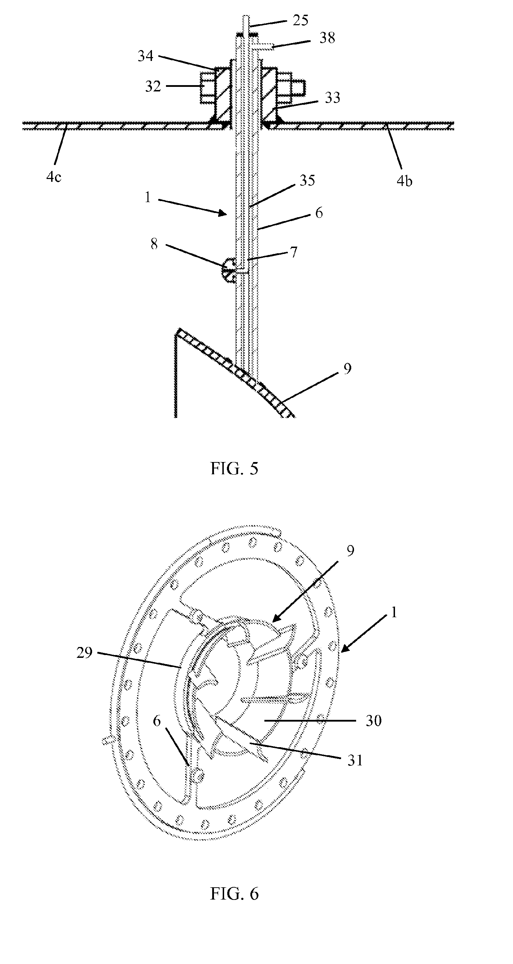

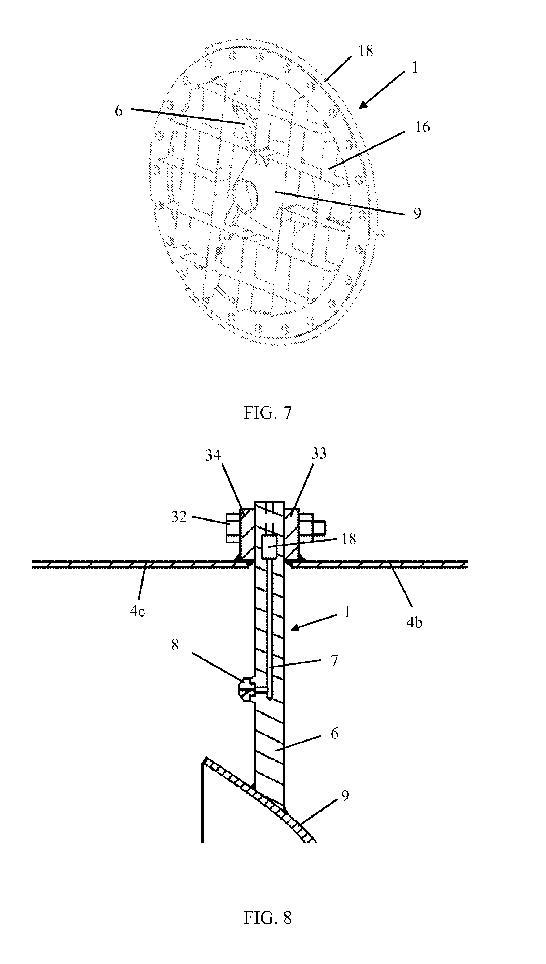

Since the nozzles 8 are arranged in the rods 6 and thus inwards from the inner circumference 2 of the flange 1, good mixing of the reducing agent with the exhaust gas flow is achieved. In the embodiment of Fig. 2, the nozzles 8 are arranged close to the inner circumference 2 of the flange 1. Fig. 3 shows another embodiment of the present invention, where the nozzles 8 are arranged approximately at the same distance from the inner circumference 2 of the flange 1 and from a center part 9 that is attached to the rods 6. Similar embodiments are shown in Figs. 6 and 8. The arrangement also comprises delivery ducts 7 for delivering the reducing agent to the nozzles 8. In the embodiment of Fig 2, the delivery ducts 7 are arranged inside the rods 6 and are therefore not shown in the figure.

The flange 1 in Fig. 2 is provided with three rods 6. The ends of the rods 6 are connected to a center part 9. With this arrangement a very rigid structure is achieved. However, the number of the rods 6 could also be different. The flange 1 could be provided with more than three rods 6, or the number of the rods 6 could also be one or two. The inner ends of the rods 6 could also be free or they could be connected to each other instead of the center part 9.

In Fig. 2, each rod 6 comprises one nozzle 8, but there could also be a plurality of nozzles 8 arranged in each rod 6. If each rod 6 is provided with a plurality of nozzles 8, even better mixing can be achieved. One delivery duct 7 is provided for each rod 6. It is possible to arrange a plurality of delivery ducts 7 for each rod 6, but even in the case of several nozzles 8 being arranged in each rod 6, one delivery duct 7 for each rod 6 is sufficient. The delivery ducts 7 are arranged inside the rods 6 in the embodiment shown in Fig. 2, but it is also possible to provide the arrangement with separate pipes or hoses delivering the reducing agent to the nozzles 8. The flange 1 is provided with holes 24 for a bolted joint with the exhaust gas duct parts 4b, 4c. In Fig. 8 it can be seen how the flange 1 has been attached to the exhaust gas duct parts 4b, 4c with bolts 32 that go through the flange 1 and flanges 33, 34 that have been welded to the exhaust gas duct parts 4b, 4c. Also the delivery ducts 7 can be seen in Fig. 8. Instead of using bolts 32, the flange 1 could be attached to the exhaust gas duct parts 4b, 4c for instance by welding. In that case, it is not necessary to provide the exhaust gas duct parts 4b, 4c with flanges 33, 34.

According to one embodiment of the present invention, the arrangement comprises a distribution duct 18 forming a flow connection between the delivery ducts 7. The distribution duct 18 is used to distribute the reducing agent to the delivery ducts 7. The distribution duct 18 eliminates the need for several separate ducts that are used to distribute the reducing agent to the delivery ducts 7. With this arrangement a simple, modular construction can be achieved. There are many options how the distribution duct 18 can be arranged. Two different options are shown in Figs. 2 and 4. In the embodiment of Fig. 2, the distribution duct 18 is arranged on the outer circumference 3 of the flange 1. The distribution duct 18 could also be arranged on the inner circumference 2 of the flange 1, but this would disturb the exhaust gas flow inside the exhaust system 4. The distribution duct 18 is provided with a pipe fitting 25, to which the pipe 26 coming from the dosing unit 22 is connected. A second pipe fitting 38 is provided for introducing pressurized air into the urea solution flow.

Another option is to form the flange 1 of two parts and arrange the distribution duct 18 between those parts as shown in Fig. 4. The flange 1 comprises a first flange part 1a and a second flange part 1b. The first flange part 1a is provided with a groove 27 and the second flange part 1b is provided with a shoulder 28. The flange parts 1a, 1b are arranged next to each other and mutually connected. The groove 27, the shoulder 28 and part of the surface of the second flange part 1b define a space between them so that the distribution duct 18 is formed between the first flange part 1a and the second flange part 1b. With the shoulder 28 good sealing between the flange parts 1a, 1b is achieved.

It would also be possible to provide the both flange parts 1a, 1b with grooves that would together define a space between the parts 1a, 1b. The distribution duct 18 can also be coated for preventing the urea solution from sticking on the walls of the distribution duct 18. For instance polytetrafluoroethylene (PTFE), which is known by the brand name Teflon®, or a similar material can be used for coating. Also an air distribution duct could be arranged between the flange parts 1a, 1b. The flange parts 1a, 1b could also be integral parts of parts of the exhaust system 4. For instance, the flange parts 1a, 1b could be welded to the exhaust gas duct parts 4b, 4c so that the flange 1 would be formed when the exhaust gas duct parts 4b, 4c are attached to each other.

According to still another embodiment of the present invention, the flange 1 is formed of a single part and the distribution duct 18 is arranged inside the flange 1. This kind of embodiment is shown in Fig. 8. The embodiments described above can also be combined. For instance, part of the distribution duct 18 can be arranged inside the flange 1 or between a first flange part 1a and a second flange part 1b, and part of the distribution duct 18 is arranged on the outer circumference 3 of the flange 1.

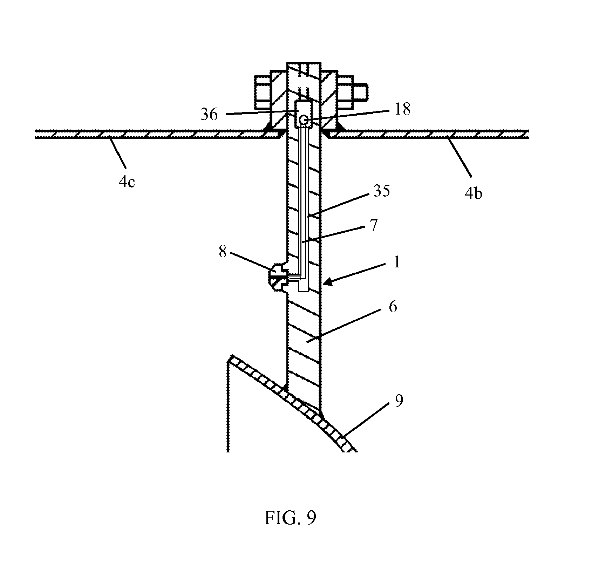

In Fig. 5 is shown an embodiment of the invention, where pressurized air is utilized for forming a fine urea spray that mixes with the exhaust gas flow. The urea solution is delivered through the pipe fitting 25 to the delivery duct 7. Around the delivery duct 7 is arranged coaxially an air delivery duct 35, to which pressurized air is delivered through the second pipe fitting 38. The urea solution and the pressurized air mix in the nozzle 8 and a fine spray is formed. In the embodiment of Fig. 9, an air distribution duct 36 is arranged inside the flange 1 for distributing the pressurized air into the air delivery ducts 35. The distribution duct 18 for the urea solution is arranged inside the air distribution duct 36. Also in this embodiment the reducing agent and the pressurized air mix in the nozzles 8. However, it would be possible to arrange a shorter delivery duct 7 inside the air delivery duct 35 so that the urea solution and the pressurized air would mix before the nozzle 8.

According to one embodiment of the invention, the arrangement for mixing reducing agent with the exhaust gas comprises a center part 9 that is arranged at the center of the flange 1. The center part 9 is hollow and has the shape of a truncated cone. At the wide end 13, the center part 9 has a first aperture 10, and at the narrow end 12 it has a second aperture 11 for letting the exhaust gas to flow through the center part 9. In the embodiment of Fig. 2, the center part 9 is attached to all three rods 6. This guarantees the maximum mechanical strength, but the center part 9 could also be connected to only one or two of the rods 6. The center part 9 is arranged so that its narrow end 12 points to the flow direction. This increases the speed of the exhaust gas flow around the center of the flange 1 and creates pressure differences across the cross-section of the exhaust gas system 4, facilitating thus mixing of the reducing agent and the exhaust gas. Fig. 3 shows another embodiment of the invention where the narrow end 12 of the center part 9 points to the direction opposite to the flow direction. If the center part 9 is arranged this way, the speed of the exhaust gas flow is reduced around the center of the flange 1 and pressure differences across the cross-section of the exhaust gas system 4 are generated. Similar embodiments are shown in Figs. 6 and 8.

The center part 9 can be arranged to rotate to make the mixing even more effective. The energy needed for rotating the center part 9 can be provided by a motor (not shown in the figures), such as an electric or pneumatic motor. It is also possible that the center part 9 is rotated by the exhaust gas flow, reducing agent flow or pressurized air. Fig. 6 shows an embodiment with a rotating center part 9. The center part 9 comprises a stationary outer ring 29, a rotating inner ring 30 that is arranged inside the outer ring 29 and blades 31 attached to the inner ring 30. The inner ring 29 and the outer ring 30 form a plain bearing that is lubricated with the reducing agent that is fed between the parts. However, it would also be possible to use some other fluid for lubrication. It would also be possible to arrange rolling elements between the outer ring 29 and the inner ring 30 so that a rolling element bearing, such as a ball bearing or roller bearing, would be formed. The parts of the center part 9 can be made for instance of steel. It is also possible to coat the parts with a material that prevents corrosion and ensures that the reducing agent and the exhaust gas do not stick onto the parts. If the center part 9 is rotated by an external power source, such as an electric motor, the center part 9 can also work as a fan evacuating the exhaust gas and reducing agent from the exhaust gas system 4 after engine shutdown.

Different auxiliaries can also be attached to the flange 1. The flange 1 can be provided for instance with a flow dresser grid 16, which can be seen in Fig. 7. The flow dresser grid 16 is attached to the flange 1 and helps to change the exhaust gas flow from turbulent to laminar. This might be useful for instance when there is a bend in the exhaust system 4 before the flange 1. In the embodiment of Fig. 7, the flow dresser grid 16 is an integral part of the flange 1, but it could also be fastened to the flange 1 for instance with bolts. It is also possible to attach different instruments to the flange 1 for measuring the properties of the exhaust gas and/or the reducing agent/exhaust gas mixture. The instruments can be fastened directly to the flange 1, to the rods 6 or to the center part 9. Some of the instruments can be arranged to measure the properties of the exhaust gas, such as velocity and temperature, before the mixing and some of the instruments can be arranged to measure the properties of the mixture of reducing agent and exhaust gas at the mixing moment. The measuring instruments can be used for instance for providing data for correct dosing of the reducing agent. It is also possible to control the rotation of the center part 9 based on the data.

It is to be understood that the invention is not limited to the embodiments described above, but may vary within the scope of the appended claims.

## Claims

1. An arrangement for mixing reducing agent with the exhaust gas of an internal combustion engine (19) in the exhaust system (4) of the engine (19) before selective catalytic reduction, **characterized in that** the arrangement comprises a flange (1) having an inner circumference (2) and an outer circumference (3), the flange (1) being arrangeable between two parts of the exhaust system (4) upstream from a catalytic converter (4d), the arrangement further comprising at least one rod (6) extending inwards from the inner circumference (2) of the flange (1), at least one nozzle (8) being arranged in the rod (6) for injecting reducing agent into the exhaust gas flow, and at least one delivery duct (7) for delivering reducing agent to the nozzle (8).

2. An arrangement according to claim 1, **characterized in that** the delivery duct (7) is arranged inside the rod (6).

3. An arrangement according to claim 1 or 2, **characterized in that** the arrangement comprises a plurality of rods (6) and at least one nozzle (8) is arranged in each rod (6).

4. An arrangement according to claim 3, **characterized in that** the arrangement comprises a distribution duct (18) forming a flow connection between at least two delivery ducts (7).

5. An arrangement according to claim 4, **characterized in that** at least part of the distribution duct (18) is arranged inside the flange (1).

6. An arrangement according to claim 4 or 5, **characterized in that** the flange (1) comprises a first flange part (1a) and a second flange part (1b), which flange parts (1a, 1b) are arranged next to each other and mutually connected, the distribution duct (18) being arranged between the flange parts (1a, 1b).

7. An arrangement according to any of the preceding claims, **characterized in that** the arrangement comprises a hollow center part (9) having the shape of a truncated cone and having a first aperture (10) at the wide end (13) and a second aperture (11) at the narrow end (12), the center part (9) being arranged around the center of the flange (1) and being attached to at least one rod (6).

8. An arrangement according to claim 7, **characterized in that** the narrow end (12) of the center part (9) points to the flow direction.

9. An arrangement according to claim 7, **characterized in that** the narrow end (12) of the center part (9) points to the direction opposite to the flow direction.

10. An arrangement according to any of claims 7-9, **characterized in that** the center part (9) is arranged to rotate.

11. A method for mixing reducing agent with the exhaust gas of an internal combustion engine (19) in the exhaust system (4) of the engine (19) before selective catalytic reduction, **characterized in that** reducing agent is injected into the exhaust gas flow through a flange (1) according to any of claims 1-10.

12. A method according to claim 11, **characterized in that** mixing of the reducing agent and the exhaust gas is facilitated by rotating a center part (9) that is attached to the rod (6).

## Patentansprüche

1. Anordnung zum Mischen eines Reduktionsmittels mit dem Abgas eines Verbrennungsmotors (19) in dem Abgassystem (4) des Motors (19) vor einer selektiven katalytischen Reaktion, **dadurch gekennzeichnet, dass** die Anordnung einen Flansch (1) mit einem Innenumfang (2) und einem Außenumfang (3) umfasst, wobei der Flansch (1) zwischen zwei Teilen des Abgassystems (4) stromaufwärts von einem Abgaskatalysator (4d) angeordnet werden kann, wobei die Anordnung ferner wenigstens eine Stange (6), die sich von dem Innenumfang (2) des Flanschs (1) einwärts erstreckt, wobei in der Stange (6) wenigstens eine Düse (8) zum Einspritzen des Reduktionsmittels in den Abgasstrom eingerichtet ist, und wenigstens einen Zufuhrkanal (7) zur Zufuhr des Reduktionsmittels zu der Düse (8) umfasst.

2. Anordnung nach Anspruch 1, **dadurch gekennzeichnet, dass** der Zufuhrkanal (7) im Inneren der Stange (6) angeordnet ist.

3. Anordnung nach Anspruch 1 oder 2, **dadurch gekennzeichnet, dass** die Anordnung mehrere Stangen (6) umfasst, wobei in jeder Stange (6) wenigstens eine Düse (8) eingerichtet ist.

4. Anordnung nach Anspruch 3, **dadurch gekennzeichnet, dass** die Anordnung einen Verteilungskanal (18) umfasst, der eine Fließverbindung zwischen wenigstens zwei Zufuhrkanälen (7) bildet.

5. Anordnung nach Anspruch 4, **dadurch gekennzeichnet, dass** wenigstens ein Teil des Verteilungskanals (18) im Inneren des Flanschs (1) angeordnet ist.

6. Anordnung nach Anspruch 4 oder 5, **dadurch gekennzeichnet, dass** der Flansch (1) einen ersten Flanschteil (1a) und einen zweiten Flanschteil (1b) umfasst, wobei die Flanschteile (1a, 1b) nebeneinander und miteinander verbunden angeordnet sind, wobei der Verteilungskanal (18) zwischen den Flanschteilen (1a, 1b) angeordnet ist.

7. Anordnung nach einem der vorhergehenden Ansprüche, **dadurch gekennzeichnet, dass** die Anordnung einen hohlen Mittelteil (9) umfasst, der die Form eines Kegelstumpfs aufweist und an dem breiten Ende (13) eine erste Öffnung (10) und an dem schmalen Ende (12) eine zweite Öffnung (11) aufweist, wobei der Mittelteil (9) um die Mitte des Flanschs (1) herum angeordnet ist und an wenigstens einer Stange (6) angebracht ist.

8. Anordnung nach Anspruch 7, **dadurch gekennzeichnet, dass** das schmale Ende (12) des Mittelteils (9) in die Strömungsrichtung weist.

9. Anordnung nach Anspruch 7, **dadurch gekennzeichnet, dass** das schmale Ende (12) des Mittelteils (9) in die zu der Strömungsrichtung entgegengesetzte Richtung weist.

10. Anordnung nach einem der Ansprüche 7 bis 9, **dadurch gekennzeichnet, dass** der Mittelteil (9) so eingerichtet ist, dass er sich dreht.

11. Verfahren zum Mischen eines Reduktionsmittels mit dem Abgas eines Verbrennungsmotors (19) in dem Abgassystem (4) des Motors (19) vor einer selektiven katalytischen Reaktion, **dadurch gekennzeichnet, dass** das Reduktionsmittel durch einen Flansch (1) nach einem der Ansprüche 1 bis 10 in den Abgasstrom eingespritzt wird.

12. Verfahren nach Anspruch 11, **dadurch gekennzeichnet, dass** das Mischen des Reduktionsmittels und des Abgases durch Drehen eines Mittelteils (9), der an der Stange (6) angebracht ist, erleichtert wird.

## Revendications

1. Agencement pour le mélange d'un agent réducteur au gaz d'échappement d'un moteur à combustion interne (19) dans le système d'échappement (4) du moteur (19) avant la réduction catalytique sélective, **caractérisé en ce que** l'agencement comprend une bride (1) présentant une circonférence intérieure (2) et une circonférence extérieure (3), la bride (1) étant agencée entre deux parties du système d'échappement (4) en amont d'un convertisseur catalytique (4d), l'agencement comprenant en outre au moins une tige (6) s'étendant vers l'intérieur depuis la circonférence intérieure (2) de la bride (1), au moins une buse (8) étant agencée dans la tige (6) pour injecter un agent réducteur dans le flux de gaz d'échappement, et au moins un conduit de fourniture (7) pour fournir l'agent réducteur à la buse (8).

2. Agencement selon la revendication 1, **caractérisé en ce que** le conduit de fourniture (7) est agencé à l'intérieur de la tige (6).

3. Agencement selon la revendication 1 ou 2, **caractérisé en ce que** l'agencement comprend une pluralité de tiges (6) et au moins une buse (8) est agencée dans chaque tige (6).

4. Agencement selon la revendication 3, **caractérisé en ce que** l'agencement comprend un conduit de distribution (18) formant une connexion d'écoulement entre au moins deux conduits de fourniture (7).

5. Agencement selon la revendication 4, **caractérisé en ce qu'**au moins une partie du conduit de distribution (18) est agencée à l'intérieur de la bride (1).

6. Agencement selon la revendication 4 ou 5, **caractérisé en ce que** la bride (1) comprend une première partie de bride (1a) et une seconde partie de bride (1b), lesquelles parties de bride (1a, 1b) sont agencées l'une à côté de l'autre et mutuellement reliées, le conduit de distribution (18) étant agencé entre les parties de bride (1a, 1b).

7. Agencement selon l'une quelconque des revendications précédentes, **caractérisé en ce que** l'agencement comprend une partie centrale creuse (9) ayant une forme tronconique et présentant une première ouverture (10) à l'extrémité large (13) et une seconde ouverture (11) à l'extrémité étroite (12), la partie centrale (9) étant agencée autour du centre de la bride (1) et étant fixée sur au moins une tige (6).

8. Agencement selon la revendication 7, **caractérisé en ce que** l'extrémité étroite (12) de la partie centrale (9) pointe dans la direction d'écoulement.

9. Agencement selon la revendication 7, **caractérisé en ce que** l'extrémité étroite (12) de la partie centrale (9) pointe dans la direction opposée à la direction d'écoulement.

10. Agencement selon l'une quelconque des revendications 7 - 9, **caractérisé en ce que** la partie centrale (9) est agencée pour tourner.

11. Procédé destiné à mélanger l'agent réducteur au gaz d'échappement d'un moteur à combustion interne (19) dans le système d'échappement (4) du moteur (19) avant la réduction catalytique sélective, **caractérisé en ce que** l'agent réducteur est injecté dans le flux de gaz d'échappement au travers d'une bride (1) selon l'une quelconque des revendications 1 - 10.

12. Agencement selon la revendication 11, **caractérisé en ce que** le mélange de l'agent réducteur et du gaz d'échappement est facilité par la rotation d'une partie centrale (9) qui est fixée à la tige (6).
